# EUROPÄISCHE PATENTSCHRIFT

(11) **EP 1 182 025 B1**
(45) Veröffentlichungstag und Bekanntmachung des Hinweises auf die Patenterteilung: **11.01.2006**
(21) Anmeldenummer: 01117071.9
(22) Anmeldetag: 13.07.2001
(51) Int. Cl.: B29C 45/17, B29C 45/76

(54) **Durch Flüssigkeiten unterstütztes Spritzgiessen**
Injection moulding assisted by liquids
Moulage par injection assisté par liquide

(30) Priorität: 16.08.2000 DE 10039815
(43) Veröffentlichungstag der Anmeldung: 27.02.2002
(73) Patentinhaber: GEIGER TECHNIK GmbH, D-82467 Garmisch-Partenkirchen (DE)
(72) Erfinder: Altenhofen, Peter, 82467 Garmisch-Patenkirchen (DE)
(74) Vertreter: Flosdorff, Jürgen

(56) Entgegenhaltungen:
- DE-A- 19 903 682
- US-A- 4 824 732
- US-A- 4 944 910
- US-A- 5 705 107

## Beschreibung

Die Erfindung betrifft ein Spritzgußverfahren zur Herstellung von Hohlkörpern, bei dem die Kavität eines Spritzgußwerkzeugs teilweise oder vollständig mit Kunststoffschmelze gefüllt wird und der noch schmelzeflüssige Kern anschließend mittels einer Druckflüssigkeit in der Kavität expandiert und/oder aus der Kavität verdrängt wird.

Bisher wird bei Verfahren der betrachteten Art im Allgemeinen ein gasförmiges Druckfluid verwendet. Dabei ist es schwierig, den Volumenstrom und den Druck des in die Kavität eingeführten Gases den jeweiligen Erfordernissen optimal anzupassen.

Die DE 199 03 682 A1 offenbart ein Spritzgußverfahren, bei dem eine Druckflüssigkeit ausschließlich volumengesteuert in die Kavität injiziert wird. In dem Auslaßkanal der Kavität ist eine Drossel vorgesehen, die den Druck nicht regeln kann, mit der die Flüssigkeit in die Kavität gefördert wird.

Die US 4,824,732 erwähnt zwar, daß als Druckfluid eine Flüssigkeit verwendet werden kann. Bei dem beschriebenen Spritzgußverfahren wird ein als Druckfluid verwendete Gas ausschließlich druckgesteuert in die Kavität injiziert.

Der vorliegenden Erfindung liegt die Aufgabe zugrunde, ein Verfahren der betrachteten Art so weiter zu entwickeln, daß die Ausbildung der Druckflüssigkeitsblase optimal steuerbar ist.

Diese Aufgabe wird erfindungsgemäß durch die Merkmale des Patentanspruchs 1 gelöst.

Vorteilhafte Ausgestaltungen der Erfindung sind in den abhängigen Ansprüchen gekennzeichnet.

Das erfindungsgemäße Verfahren sieht vor, daß in Phasen der Druckflüssigkeitsinjektion zwischen Druck- und Volumensteuerung gewechselt wird, wobei in der Einleitungsphase der Volumenstrom der zugeführten Druckflüssigkeit und in der abschließenden Phase deren Druck gesteuert wird.

Durch den Wechsel zwischen Druck- und Volumensteuerung der Druckflüssigkeit kann ihre Injektion in die Kunststoffschmelze mit größter Genauigkeit dosiert werden, womit die Ausbildung der Druckflüssigkeitsblase exakt gesteuert wird.

Bei dem erfindungsgemäßen Verfahren kann der Schritt der Druckflüssigkeitsinjektion bevorzugt in drei Phasen unterteilt werden, nämlich eine Einleitungsphase, eine Verdrängungsphase und eine Nachdruckphase.

Die Erfindung sieht vor, in der Einleitungsphase den Volumenstrom zu steuern, und zwar bevorzugt zu Beginn der Einleitungsphase einen geringen Volumenstrom einzustellen, wodurch gewährleistet werden kann, daß der Druckflüssigkeitsstrahl durch die Kunststoffschmelze nicht hindurchschießt. Im weiteren Verlauf der Einleitungsphase sollte der Volumenstrom allmählich auf einen Endwert ansteigen. Hiermit kann sich eine Quellströmung der Druckflüssigkeit ausbilden, wodurch die Schmelze gleichmäßig verdrängt wird.

In der abschließenden Nachdruckphase am Ende des Weiterbewegens und/oder der Verdrängung des flüssigen Schmelzekerns wird die Druckflüssigkeit druckgesteuert eingeleitet, wodurch ein genau definierter Nachdruck eingestellt werden kann, um den Kunststoff zu verdichten und somit Lunker oder Schwindungslanzen zu vermeiden.

In der dazwischen liegenden Verdrängungsphase ist bevorzugt vorgesehen, daß sich die Druckflüssigkeitsblase mit ausgewählter Geschwindigkeit oder ausgewähltem Druck ausbreitet. Durch die Größe des Volumenstroms läßt sich die resultierende Wandstärke beeinflussen.

Die verwendete Spritzgußanlage hat eine Kolben/Zylindereinheit für eine Flüssigkeit, die der Kolben mit regelbarem Volumenstrom und regelbarem Druck als Druckfluid in die Kavität fördert. Dabei ist die Kolben/Zylindereinheit über geeignete Leitungs- und Anschlußsysteme mit dem Werkzeug verbunden.

In weiteren Einzelheiten ist vorgesehen, daß der Kolben mit einem elektrischen Spindelantrieb oder elektrischen Schneckenantrieb verbunden ist. Alternativ hierzu kann der Kolben mit einer hydraulischen Antriebseinrichtung oder einem hydraulischen Schneckenantrieb verbunden sein.

Da es sich bei der Druckflüssigkeitsinjektion um einen zyklischen Prozeß handelt, ist weiter vorgesehen, daß der Druckflüssigkeitszylinder nach der Injektion erneut mit der Druckflüssigkeit beladen wird. Die Beladung des Zylinders mit dem Druckmedium, z.B. Wasser kann dadurch erfolgen, daß die Flüssigkeit durch eine Rückwärtsbewegung des Kolbens aus einem Flüssigkeitsvorratsbehälter angesaugt wird. Alternativ hierzu kann die Druckflüssigkeit infolge einer Druckbeaufschlagung in den Zylinder gedrückt werden.

Mit dem erfindungsgemäßen Verfahren läßt sich der Arbeitsschritt des Aufblasens der Kunststoffschmelze in der Kavität und/oder der Verdrängung des Schmelzekerns aus der Kavität den jeweiligen Gegebenheiten entsprechend optimieren, da die in die Kavität eingeführte Druckflüssigkeit durch die Kolben/Zylindereinheit mit größter Genauigkeit volumen- oder druckgesteuert injiziert werden kann,
wobei zwischen der Druck- und Volumenstromregelung problemlos gewechselt werden kann. Dies wird mit einem verhältnismäßig geringen konstruktiven Aufwand beim Aufbau der Spritzgußanlage erreicht.

Weitere Einzelheiten der Erfindung ergeben sich aus der nachfolgenden Beschreibung sowie anhand der Zeichnung. Dabei zeigen auf schematische Weise:
- Fig. 1: eine erste Ausführungsform einer Druckflüssigkeits-Baugruppe beim Ansaugen von Druckflüssigkeit;
- Fig. 2: die Baugruppe gemäß Fig. 1 beim Ausbringen von Druckflüssigkeit;
- Fig. 3: eine ähnliche Baugruppe mit einem Längsschieber zur Wassersteuerung in einem Fig. 1 entsprechenden Zustand und
- Fig. 4: die Baugruppe gemäß Fig. 3 beim Ausbringen der Druckflüssigkeit.

In den Figuren ist ein Zylinder 1 mit einem Kolben 2 dargestellt, der über eine Kolbenstange 3 mit einem elektrischen oder hydraulischen Spindelantrieb 4 verbunden ist, der einen herkömmlichen Aufbau hat und hier nicht näher zu beschreiben ist.

In einem Vorratsbehälter 5 befindet sich eine Flüssigkeit 6. Über eine Leitung 7 und eine Steuerungseinrichtung 8 steht der Innenraum des Vorratsbehälters 5 mit der Kammer 9 des Zylinders 1 in Verbindung.

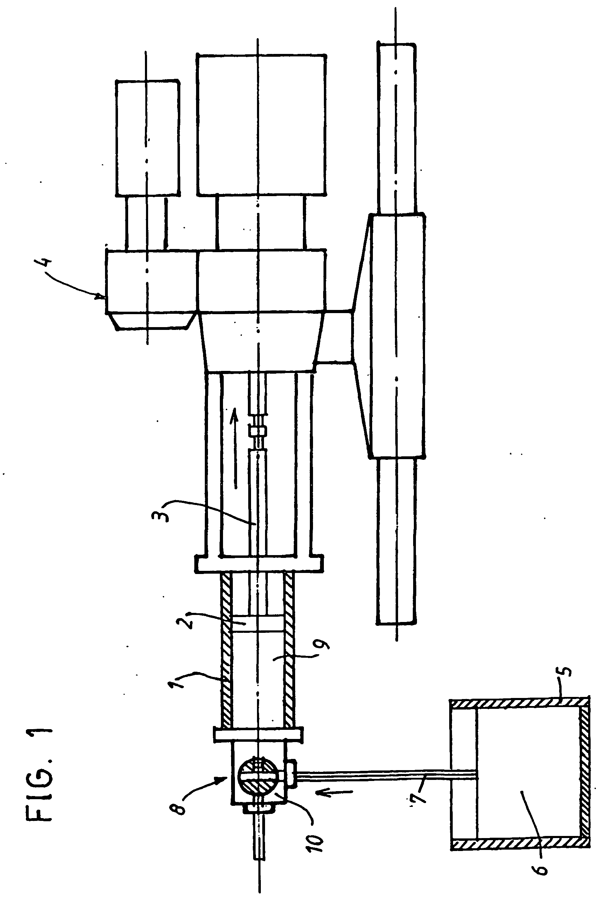

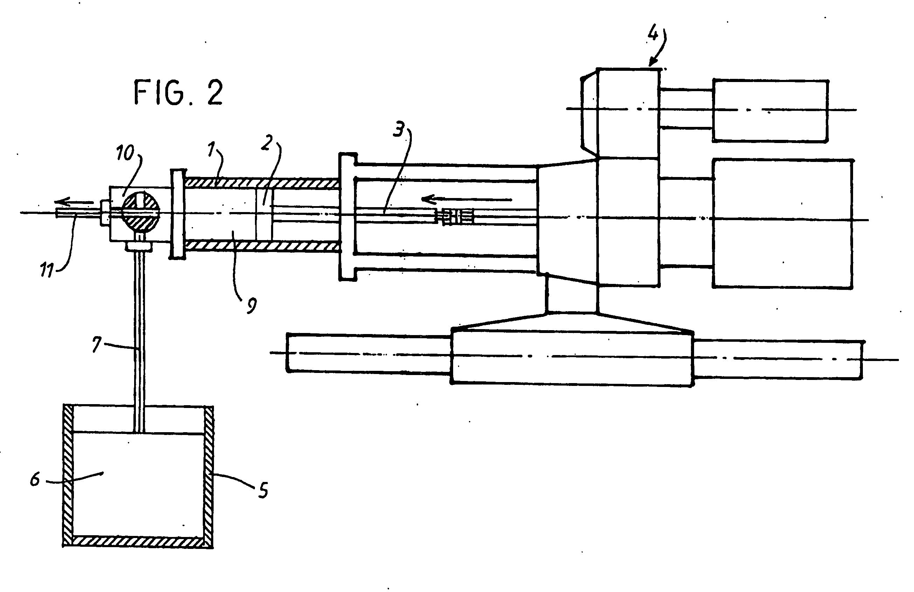

Bei der in den Figuren 1 und 2 dargestellten Ausführungsform besteht die Wassersteuerungseinrichtung aus einem Drehschieber 10.

Fig. 1 zeigt die Phase, in der durch Zurückziehen des Kolbens 2 Druckflüssigkeit in die Zylinderkammer 9 angesaugt wird.

In dem in Figur 2 dargestellten Zustand verbindet der Drehschieber 10 die Zylinderkammer mit einer zum (nicht dargestellten Werkzeug führenden Anschlußleitung 11. Durch Vorschub des Kolbens 2 wird Druckflüssigkeit in die mit Kunststoffschmelze gefüllte Kavität des Werkzeugs injiziert.

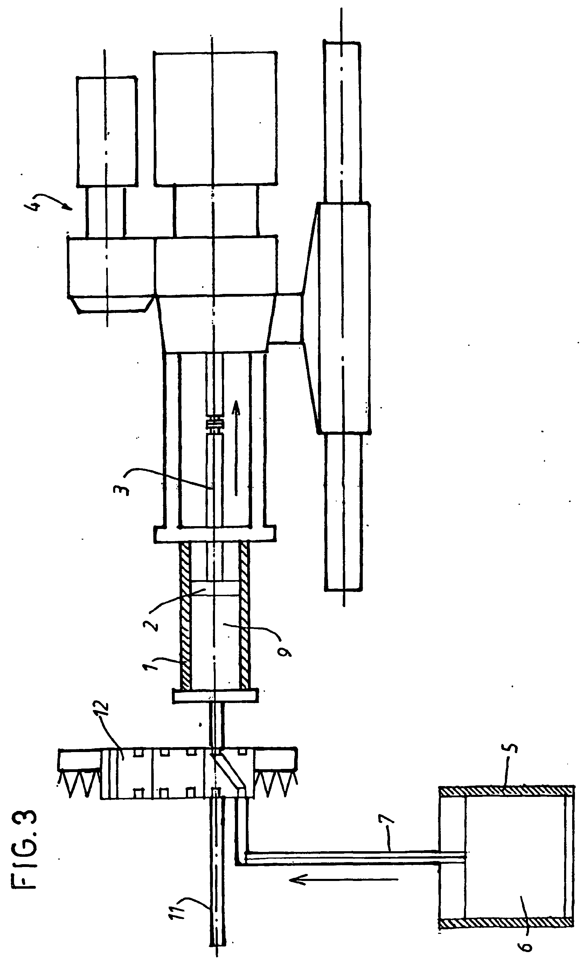

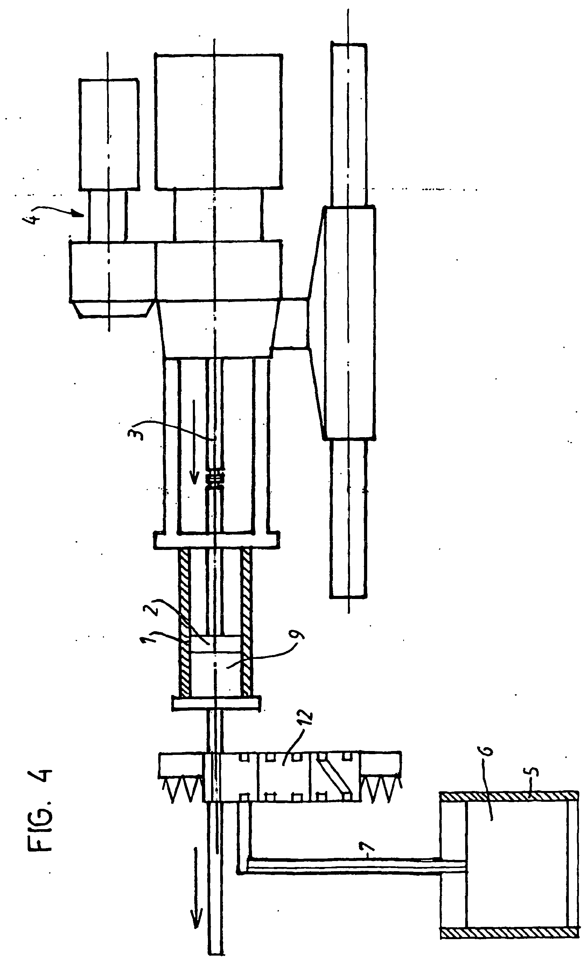

Die in den Figuren 3 und 4 dargestellte Ausführungsform unterscheidet sich von der ersten Ausführungsform dadurch, daß zur Wassersteuerung ein Längsschieber 12 eingesetzt wird. In dem in Figur 3 dargestellten Zustand verbindet der Längsschieber 12 die aus dem Vorratsbehälter 5 führende Leitung 7 mit der Zylinderkammer 9, so daß durch Zurückziehen des Kolbens 2 Wasser in die Zylinderkammer 9 angesaugt werden kann.

In dem in Fig. 4 dargestellten Zustand verbindet der Längsschieber 12 die Anschlußleitung 11 mit der Zylinderkammer 9.

## Patentansprüche

1. Spritzgußverfahren zur Herstellung von Hohlkörpern, bei dem die Kavität eines Spritzgußwerkzeugs teilweise oder vollständig mit Kunststoffschmelze gefüllt wird und der noch schmelzeflüssige Kern anschließend mittels einer Druckflüssigkeit in der Kavität expandiert und/oder aus der Kavität verdrängt wird,
**dadurch gekennzeichnet,**
**daß** in Phasen der Druckflüssigkeitsinjektion zwischen Druck- und Volumensteuerung gewechselt wird, wobei in der Einleitungsphase der Volumenstrom der zugeführten Druckflüssigkeit und in der abschließenden Phase deren Druck gesteuert wird.

2. Verfahren nach Anspruch 1,
**dadurch gekennzeichnet, daß** in der Einleitungsphase der Injektion ein geringer Volumenstrom eingestellt wird, der zunehmend auf einen höheren Endwert gesteigert wird.

3. Verfahren nach Anspruch 1,
**dadurch gekennzeichnet, daß** in der Einleitungsphase der Injektion ein höherer Volumenstrom eingestellt wird, der kontinuierlich auf einen niedrigeren Endwert reduziert wird.

4. Verfahren nach einem der Ansprüche 1 bis 3,
**dadurch gekennzeichnet, daß** in der anschließenden Verdrängungsphase eine ausgewählte Druckfluidgeschwindigkeit eingestellt wird.

5. Verfahren nach einem der Ansprüche 1 bis 3,
**dadurch gekennzeichnet, daß** in der anschließenden Verdrängungsphase ein ausgewählter Druck eingestellt wird.

## Claims

1. An injection molding method for producing hollow bodies, in which the cavity of an injection molding tool is filled partly or completely with a plastic melt and the core which is still in a molten state is then expanded by means of a pressurized liquid into the cavity and/or is displaced from said cavity,
**characterized in**
**that** in phases of pressurized liquid injection there is a change between pressure control and volume control, the volumetric flow rate of the supplied pressurized liquid being controlled in the introduction phase and the pressure thereof in the subsequent phase.

2. The method according to claim 1,
**characterized in that** in the introduction phase of the injection a lower volumetric flow rate is set, said flow rate being continuously raised to a higher final value.

3. The method according to claim 1,
**characterized in that**
in the introduction phase of the injection a higher volumetric flow rate is set, said flow rate being continuously reduced to a lower final value.

4. The method according to any one of claims 1 to 3,
**characterized in that** in the subsequent displacement phase a selected pressurized fluid rate is set.

5. The method according to any one of claims 1 to 3,
**characterized in that** in the subsequent displacement phase a selected pressure is set.

## Revendications

1. Procédé de moulage par injection pour la fabrication de corps creux, dans lequel la cavité d'un outil de moulage par injection est remplie partiellement ou entièrement de masse fondue de matériau synthétique, et le noyau encore en fusion est dilaté ensuite au moyen d'un liquide sous pression dans la cavité et/ou est refoulé de la cavité,
**caractérisé**
**en ce que** dans des phases de l'injection du liquide sous pression, on alterne entre la commande de pression et de volume, où en phase d'introduction, le flux volumique du liquide sous pression amené est commandé et, dans la phase terminale, sa pression.

2. Procédé selon la revendication 1, **caractérisé en ce que** lors de la phase d'introduction de l'injection, un flux volumique plus faible est réglé qui est augmenté progressivement à une valeur finale plus élevée.

3. Procédé selon la revendication 1, **caractérisé en ce que** dans la phase d'introduction de l'injection, un flux volumique plus élevé est réglé qui est réduit continuellement à une valeur finale plus basse.

4. Procédé selon l'une des revendications 1 à 3,
**caractérisé en ce que** dans la phase de refoulement qui fait suite, une vitesse sélectionnée du fluide sous pression est réglée.

5. Procédé selon l'une des revendications 1 à 3,
**caractérisé en ce que** dans la phase de refoulement qui fait suite, une pression sélectionnée est réglée.
